# EUROPEAN PATENT SPECIFICATION

(11) **EP 3 366 111 B1**
(45) Date of publication and mention of the grant of the patent: **08.09.2021**
(21) Application number: 18158742.9
(22) Date of filing: 27.02.2018
(51) Int. Cl.: A01G 5/04, A01G 5/00, A01G 3/02

(54) **FLOWER STEM AND ASSOCIATED METHOD**
BLUMENSTÄNGEL UND ZUGEHÖRIGES VERFAHREN
TIGE DE FLEUR ET PROCÉDÉ ASSOCIÉ

(30) Priority: 28.02.2017 NO 20170286
(43) Date of publication of application: 29.08.2018
(73) Proprietor: Aqua Victoria AS, 3420 Lierskogen (NO)
(72) Inventor: JENSEN, Terje, 1397 Nesøya (NO)
(74) Representative: Protector IP AS

(56) References cited:
- CH-A- 176 837
- DE-A1- 2 509 724
- FR-A1- 2 614 195
- US-A- 1 617 785
- US-A- 3 491 445
- US-A- 5 167 672

## Description

### Technical Field

The present invention relates to the commercial flower industry, in particular to cut flowers that are sold to consumers in flower shops, garden centers, supermarkets or the like.

### Background Art

The florist industry is a large and developed industry throughout many parts of the world. Flowers are grown, cut, transported and then sold to consumers. After cutting, the flowers are commonly stored vertically with the lower part of their stem in water, to keep the flowers fresh and healthy.

FR2614195 discloses a box for displaying flowers having a hollow stem, such as amaryllis or molucella. The box has a lower plate onto which the stems are supported in an upright orientation.

Publication US3491445A discloses a tool for cutting into the stem bark of cut flowers to increase their ability to take up water. The depths of the cuts are configured to extend barely through the bark so that the pulpy central portion of the stem is left intact.

### Summary of invention

According to a first aspect of the present invention, there is provided a flower with a cut hollow stem preparation method for water spill reduction during removal of the flower from a water-containing flower container, according to claim 1.

As will be discussed in greater detail below, such a stem ventilation arrangement will let air into the hollow stem when the flower is lifted out of water. As a result, water will escape from the hollow stem significantly faster than with a hollow flower stem of the prior art.

In some embodiments of the method according to the first aspect of the invention, the method can comprise arranging a vent hole through the stem wall, at a distance from the lower stem end that corresponds to at least one tenth of the length of the stem, when the flower is in a cut mode.

In other embodiments, the method can comprise arranging a vent pipe to the stem, so that the stem pipe extends downwards along the stem, from a position on the inner side of the stem wall and at a distance from the stem end, out of the stem at the stem end, and further upwards along the stem wall, such that air can flow through the vent pipe from between its two open pipe ends when these are arranged above the water level.

With such embodiments, one will not need to affect the material in the stem, thereby letting the flower be intact.

When arranging the stem hole in the stem wall, this can in some embodiments be performed by removing stem material from the stem wall.

Such stem material removal may reduce harm to the stem, compared to alternative methods, thereby improving appearance of the stem at the faces around the vent hole.

In an embodiment involving arranging the vent hole in the stem, the vent hole can advantageously be provided at a distance from the lower stem end, wherein the distance corresponds to at least one tenth of the length of the stem, when the flower is in a cut mode.

Advantageously, the vent hole can be arranged at a vertical position on the stem, which is below the vertical center position between the flower portion and the lower end of the stem.

As used herein, the vertical length of a cut, hollow stem is from the lower stem end, where the stem has been cut, to the position where it is no longer hollow. Typically, this will be at the flower portion.

The method may comprise coating the edge of the vent hole with a deterioration reducing agent. Such a deterioration reducing agent may for instance be citrus acid, oil or fat. The purpose of such a deterioration reducing agent is to limit or prevent poor appearance of the stem at the position of the vent hole. Such poor appearance may be result of oxidation of the edge of the vent hole.

The method according to the first aspect of the invention may include to provide the vent hole with an insert that has a vent channel. Such an insert may reduce poor appearance, for instance resulting from oxidation, at the area of the vent hole. Such an insert may also prevent unintentional closure of the vent hole.

According to a second aspect of the present invention, there is provided a flower with a cut hollow stem and standing with a lower stem end of the stem below a water level in a water-containing container. According to this aspect of the invention, the hollow stem has a stem ventilation arrangement. The stem ventilation arrangement comprises an air communication path between an inner side of the stem wall and an outer side of the stem wall, at a distance from the lower stem end, such that there can be air communication between said inner and outer sides of the stem wall if the lower stem end is located in water below a water level.

In some embodiments of the second aspect of the invention, the stem ventilation arrangement can comprise a vent hole through the stem wall at a distance from the lower stem end.

In other embodiments of the second aspect of the invention, the stem ventilation arrangement can comprise a vent pipe attached to the stem, so that the stem pipe extends downwards along the stem, from a position on the inner side of the stem wall and at a distance from the stem end, out of the stem at the stem end, and further upwards along the stem wall, such that air can flow through the vent pipe from between its two open pipe ends as these are arranged above the water level.

In an embodiment of such a flower with a vent hole, the vent hole can be constituted by removed stem material. A vent hole constituted in this manner may improve appearance of the stem at the position of the vent hole, compared to other types of vent holes.

In an embodiment of the second aspect of the invention, an insert having a vent channel can be attached to the vent hole.

In embodiments according to the second aspect of the present invention, the vent hole can be arranged at a vertical position on the hollow stem, which is below the vertical center position between the flower portion and the lower end of the stem.

In some embodiments, the stem material surface at the vent hole can comprise a deterioration reducing agent, coated on the edge of the vent hole. Such an agent may be an acid, oil or fat.

In embodiments comprising the insert, the insert may have a male insert and a female insert, wherein the male insert is configured to be in an inserted position, inside a receiving bore of the female insert, when in a connected position.

It will be appreciated that the various aspects of the present invention relate to letting air flow into the hollow stem when the stem is lifted out of water, even when the lower stem end is still below the water level in the container. In this manner, water inside the stem will immediately start flowing out of the stem when lifting of the stem starts. The result is that, once the lower stem end has been lifted above the water level, most of the water has already flown out of the hollow stem.

### Brief description of drawings

While a general discussion of the present invention has been given above, a more detailed example of embodiment will be presented in the following with reference to the drawings, in which
Fig. 1 is a side view of a plurality of flowers being stored in a water-containing container;
Fig. 2 is a perspective view of one flower having a hollow stem and a flower portion;
Fig. 3 is an enlarged cross section view through the lower portions of two hollow flower stems that are about to be lifted out of the water-containing container;
Fig.4 is an enlarged cross section side view of a part of the hollow stem;
Fig. 5 is an even further enlarged cross section view illustrating a vent hole in a hollow stem;
Fig. 6 is a principle perspective view of a stem perforation tool;
Fig. 7 is an enlarged cross section view of an embodiment of a stem having a vent hole provided with an insert;
Fig. 8 illustrates a stem perforation tool in the form of a perforation pliers;
Fig. 9 depicts an alternative embodiment of the present invention with a side cross section view;
Fig. 10 shows a perspective view of a lower end of a flower stem, which is prepared according to the invention; and
Fig. 11 shows a vent pipe.

### Detailed description of the invention

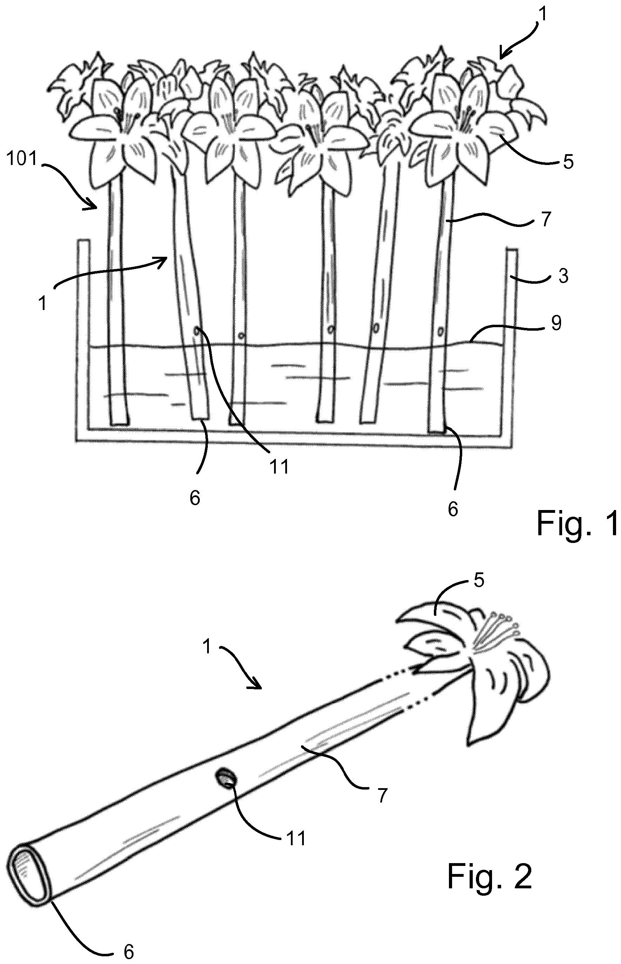

Fig. 1 depicts a plurality of flowers 1 that are being stored in a substantially upright orientation in a water-containing container 3. The flowers 1 have a flower portion 5 and a hollow stem 7 extending down from the flower portion 5. Flowers to which the present invention pertains are only flowers that have hollow stems 7. Amaryllis is a well-known example of a flower having a hollow stem. The stem 7 thus has an inner bore and a stem wall that defines the inner bore.

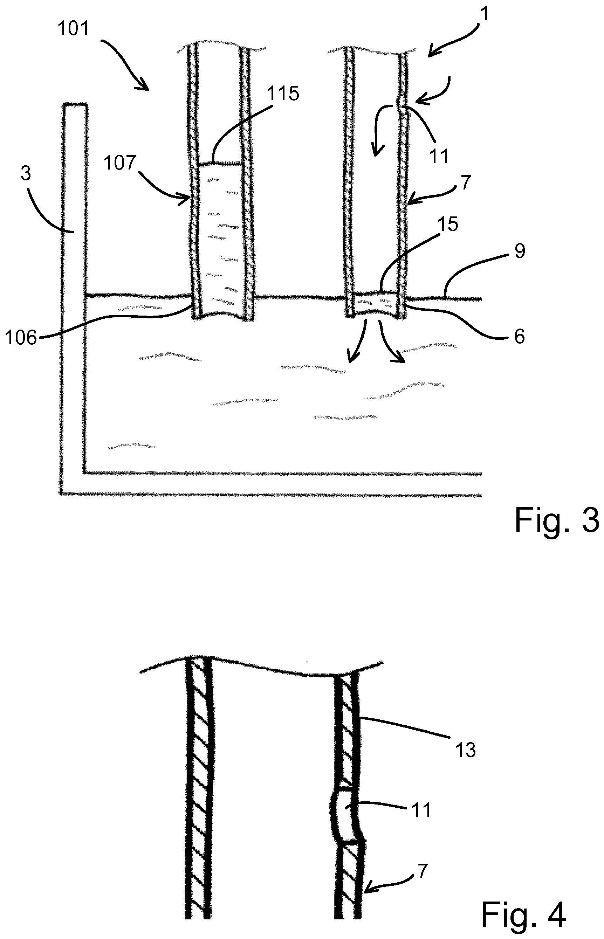

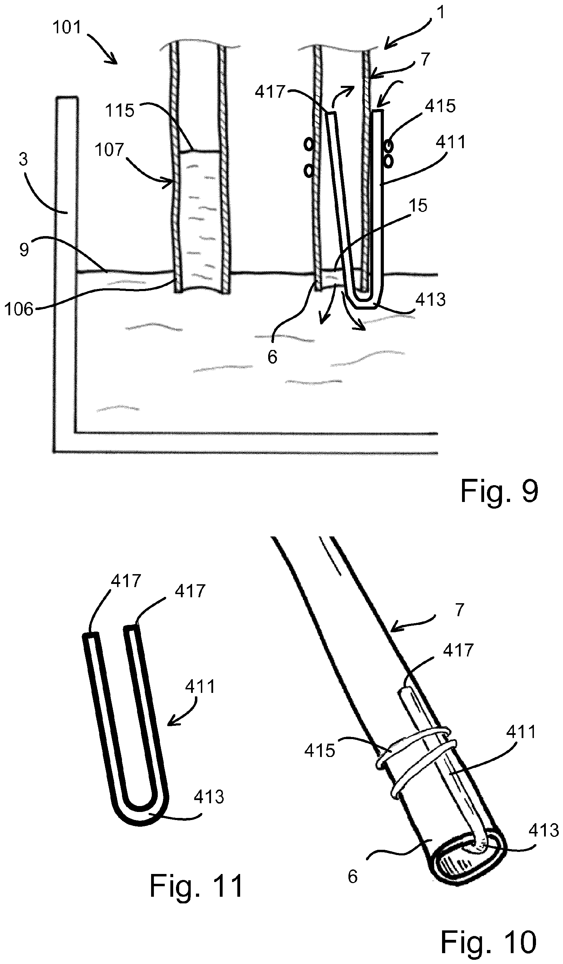

At the left hand side of Fig. 1, a flower 101 according to prior art is also shown. This flower will be discussed further below with reference to Fig. 3 and Fig. 9.

When cut, after having being grown, the lower stem end 6 of the stem 7 thus resembles an open pipe end. When stored as illustrated in Fig. 1, the lower stem ends 6 of the stems 7 are arranged below a water level 9 of the water contained in the container 3. As the skilled person will appreciate, the flowers 1 are stored with the lower ends of the stems in water to keep the flowers fresh and healthy. Such storage of flowers 1 can occur in many places. For instance, the flowers may be stored in this manner immediately after having been cut at a plantation facility, in a transport step away from the plantation facility, in a storage room, or when being presented to a customer at a market garden or a shopping center, etc.

Fig. 2 is a perspective view of a flower 1 according to the invention, where the open stem end 6 of the hollow stem 7 is shown.

Fig. 3 depicts the lower portion of a hollow flower stem 107 of a flower 101 according to the prior art (on the left hand side) and the lower portion of a hollow flower stem 7 according to the present invention (right hand side). In the stem 7 of the flower according to the present invention, there is provided a stem ventilation arrangement 11. In this embodiment, the stem ventilation arrangement is in the form of a vent hole 11 through the wall 13 of the stem 7. Such a vent hole is also indicated in Fig. 1 and Fig. 2.

When lifting up the flower prepared according to the present invention, ambient air will flow into the hollow stem 7 through the vent hole 11, as illustrated with the arrows in Fig. 3. This lowers the water column inside the stem 7 significantly during the upward movement of the stem. The water column level 15 inside the prepared stem 7 is shown.

In the not-prepared stem 107 of the flower according to the prior art, however, the water column level 115 is significantly higher. This is because air is not able to enter into the stem 107, as there is no stem ventilation arrangement 11 present. When lifting the prior art type stem 107 up from the water, air is not able to enter the stem 107 before the lower stem end 106 of the stem 107 has been lifted above the water level 9 of the water inside the container 3. Moreover, when air finally is admitted into the stem 107, it needs to flow adjacent the water inside the stem 107 which is about to flow out. Thus, it will take some time before the water inside the prior art stem 107 has been removed from the stem, after having been lifted out of the water.

Notably, when the stem 7 of the prepared flower according to the present invention is lifted, the outflow of water from the hollow stem 7 starts immediately after the lifting movement of the stem. Moreover, the air entering the stem 7 does not need to flow adjacent the water in the shared space as with the prior art stem 107, as it flows through the vent hole 11.

Thus, compared to the prior art stem 107,
- the outflow of water from the inventive stem starts to flow out immediately after the lifting of the flower starts (water flow starts sooner);
- the inflowing air does not need to counterflow adjacent the outflowing water in the restricted space inside the hollow stem.

When removing a flower 1 from the water-containing container 3, one will with a flower prepared according to the present invention consequently be less likely to spill water outside the container 3. This is because substantially all the water present within the hollow stem 7 will flow out immediately when lifting the flower 1.

In order not to spill water outside the container when lifting out a flower according to the prior art, however, one will have to wait, typically a couple of seconds, before the water has run out from the hollow stem 107. It is indeed possible to retain the flowers above the container to wait for the water to flow out, to avoid water spill on the floor or other surfaces. However, practice has shown that such water spill occurs to a significant extent.

For some types of flowers, for instance Amaryllis, the hollow stems may accommodate a significant amount of water. In the following an example is given to illustrate a typical amount of water that can be spilled outside such a container, for instance at a flower shop.

In this example, a flower bouquet of 5 amaryllis flowers is lifted out of a container having 10 cm of water. The inside "bore" of the hollow stems have an average diameter of 2 cm. The amount of water accommodated inside the five stems is then about 1,6 dl (π x 1cm x 1cm x 10 cm x 5 stems = 157 cm³). Now, if for instance half of this water ends up on a floor or on a desk next to the container, such as in a flower shop, one will easily appreciate that the venue will soon become messy and less presentable.

Fig. 4 is an enlarged cross section side view of a part of the hollow stem 7 of a flower 1. In the shown embodiment, stem material has been removed from the stem wall 13, to provide the vent hole 11. In other embodiments, one may provide the vent hole 11 by forcing open a vent hole 11, by moving wall material away. This can be done by using for instance an awl.

By removing material from the stem wall 13 to provide the vent hole 11, instead of forcing open a vent hole, less damage will be inflicted to the stem 7. This may improve appearance and reduce deterioration to the stem at the area of the vent hole.

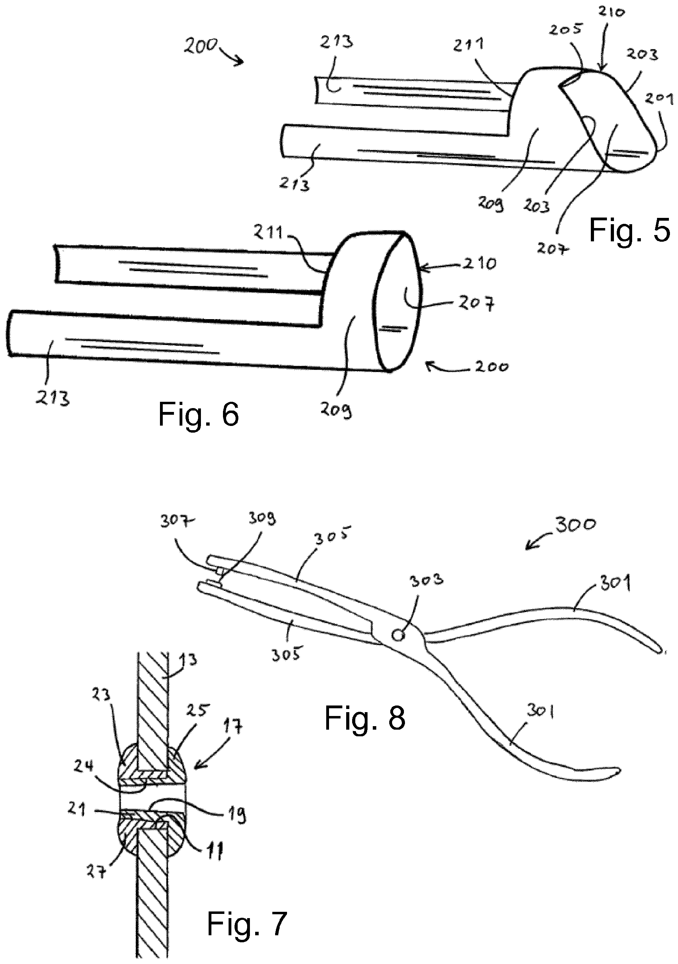

Fig. 5 depicts a principle sketch of a stem perforation tool 200, which is designed for providing a vent hole 11 of the type where stem material has been removed. It has a generally round cylindrical basic shape, where some material has been removed from the cylindrical shape. At a front portion, it has a cutting edge tip 201, which is formed as a sharp edge configured to cut a first slit into the stem wall 13. On both sides of the cutting edge tip 201, it is continued with inclined cutting edges 203. The inclined cutting edges extend backwards and meet at a rear cutting edge 205. In the shown embodiment, the two inclined cutting edges meet at a corner with different angles at the rear cutting edge 205. One may however also imagine that an entire cutting edge perimeter 210, comprising the cutting edge tip 201, inclined cutting edge 203 and a rear cutting edge 205, without any corners. That is, the shape of the cutting edge perimeter 210 can be continuous.

The cutting edge perimeter 210 extends along the edge of a tool bore 207. The tool bore 207 is the inner bore of a cutting ring 209, which extends continuously about the tool bore 207. Further backwards, the cutting ring 209 has rear edges 211 (only one visible in Fig. 5). When inserting the cutting ring 209, with its cutting edge perimeter 210, into a hollow stem 7, some stem material will enter into the tool bore 207 within the cutting ring 209. At the rear side of the rear edges 211, the stem perforation tool 200 is open so that stem material can fall out of the tool.

Extending even further rearwards from the cutting ring 209, there are two ring carriers 213. Advantageously, the ring carriers 213 may be attached to a tool handle (not shown). The tool handle can typically be held by a user for providing the vent hole 11 in the hollow stems 7.

Fig. 6 depicts an alternative embodiment of the stem perforation tool 200, which is similar to the tool shown in Fig. 5 in many respects. In the embodiment shown in Fig. 6, however, the cutting edge perimeter 210 is arranged in one plane that faces parallel with the axis of the tool bore 207. With a cutting edge perimeter 210, the user may obtain a cutting / slicing effect by rotating the tool about its center axis.

Other types of tools can be used for providing the vent hole 11, for instance an awl, as mentioned above, a rotating drill, or a punching tool.

Fig. 7 depicts an enlarged cross section view of a stem wall 13 which has been provided with a vent hole 11. In this embodiment there is provided an insert 17 in the vent hole 11. The insert 17 is attached to the stem wall 13, and is provided with a vent channel 19 that provides fluid communication between the inside and outside of the stem wall 13. In the shown embodiment, the insert 17 comprises a male insert 21 and a female insert 23. The male insert 21 is configured to be inserted into a receiving bore 24 of the female insert 23, into a connected position, which is shown in Fig. 7. When in this connected, installed position, a male collar 25 and a female collar 27 extend beyond the diameter of the vent hole 11 of the stem wall 13, thereby retaining the insert 17 in place.

The insert 17 can typically be produced with a plastic material. In some embodiments, one may imagine installing the insert as a pop rivet, by using a rivet tool.

Fig. 8 depicts an alternative stem perforation tool 300. In this embodiment, the stem perforation tool 300 is shaped like a perforation pliers. The perforation pliers 300 has a handle constituted by two levers 301. The two levers are joined at a hinged joint 303. Out from the section of the hinged joint 303, two jaws 305 extend in substantial parallel directions, with a mutual distance. As with other common pliers, the two jaws 305 are extensions of the two levers of the handle. At the respective end portions of the jaws 305, there is a punching head 307 and a counter face 309.

When used for providing a vent hole 11 in a flower stem 7, one of the two jaws 305 is inserted into the stem, and a vent hole 11 is punched open by operating the handle. The length of the two jaws 305, or in particular the length between the portion with the hinged joint 303 and the punching head 307, governs the possible distance between the end 6 of the stem 7, and the vent hole 11. Advantageously, with the perforation pliers 300 according to this embodiment, this length is at least 10 cm.

For the various embodiments discussed above and also for other embodiments within the scope of the invention, the diameter of the vent hole 11 can typically be between 1 and 5 mm, advantageously between 2 and 4 mm, and preferably about 3 mm.

Fig. 9 and Fig. 10 depicts an alternative embodiment of the present invention. In Fig. 9, the stem 107 on the left hand side is a stem according to prior art, while the stem 7 on the right is according to the present invention.

In this embodiment the stem ventilation arrangement 11 is not in the form of a vent hole through the stem wall, but rather in the form of a vent pipe 411. The vent pipe 411 can typically be similar to a plastic drinking straw. The vent pipe 411 has two open ends 417, between which air can flow through the vent pipe.

In some embodiments, the vent pipe 411 can have a bending section 413 at a distance from both its ends, at which location the vent pipe 411 is configured to bend. In other embodiments including the vent pipe 411, the vent pipe may be prebent, so that its original shape is like a bent pipe. In this way, the vent pipe 411 does not need to be bent by a user before use.

The vent pipe 411 can be attached to the lower end 6 of the stem 7 in different ways. In the embodiment shown in Fig. 9 and Fig. 10, the vent pipe 411 is attached with an elastic band, such as a rubber band 415.

In alternative embodiments, the vent pipe 411 may for instance be formed like a clip, so that the two lengths of the pipe that extends out from the bending section 413 will clamp against the wall 13 of the stem 7. One will then not need the rubber band to attach the vent pipe 411 to the stem 7.

In Fig. 9, arrows are introduced to indicate the outflow of water from the end 6 of the stem 7, and to indicate inflow and outflow of air into and out from the vent pipe 411.

In the shown position in Fig. 9, the stem 7 has been lifted a distance upwards, and will soon be above the water level 9 in the container 3. As with the embodiment shown in Fig. 3, a significant amount of water inside the stem 7 has already flown out of the stem. This is because air is let into the space above the water inside the stem.

Fig. 11 depicts a principle drawing of a vent pipe 411.

## Claims

1. A flower with a cut hollow stem preparation method for water spill reduction during removal of the flower (1) from a water-containing flower container (3), wherein the flower (1) has a flower portion (5) arranged at an upper stem end of the hollow stem (7) comprising a stem wall (13), wherein the hollow stem (7) has a lower stem end (6),
**characterized in that** the flower preparation method comprises the following step:
a) providing the hollow stem (7) with a stem ventilation arrangement (11, 411)
wherein the stem ventilation arrangement comprises an air communication path between an inner side of the stem wall (13) and an outer side of the stem wall, at a distance from the lower stem end (6), such that there can be air communication between said inner and outer sides of the stem wall (13) if the lower stem end (6) is located in water below a water level (9).

2. A flower preparation method according to claim 1, wherein step a) comprises arranging a vent hole (11) through the stem wall (13), at a distance from the lower stem end (6) that corresponds to at least one tenth of the length of the hollow stem (7), when the flower is cut.

3. A flower preparation method according to claim 1, wherein step a) comprises arranging a vent pipe (411) to the hollow stem (7), so that the vent pipe extends downwards along the hollow stem, from a position on the inner side of the stem wall (13) and at a distance from the stem end (6), out of the hollow stem at the stem end (6), and further upwards along the stem wall (13), such that air can flow through the vent pipe from between its two open pipe ends (417) when these are arranged above the water level (9).

4. A flower preparation method according to claim 2, wherein step a) comprises removing stem material from said wall (13), when producing the vent hole (11).

5. A flower preparation method according to claim 2 or claim 4, comprising coating an edge of the vent hole (11) with a deterioration reducing agent.

6. A flower preparation method according to one of claims 2, 4 or 5, comprising providing the vent hole (11) with an insert (17) with a vent channel (19).

7. A flower (1) with a cut hollow stem (7) and standing with a lower stem end (6) of the stem below a water level (9) in a water-containing container (3), **characterized in that** the hollow stem (7) comprises a stem ventilation arrangement (11, 411), wherein the stem ventilation arrangement comprises an air communication path between an inner side of the stem wall (13) and an outer side of the stem wall, at a distance from the lower stem end (6), such that there can be air communication between said inner and outer sides of the stem wall (13) if the lower stem end (6) is located in water below a water level (9).

8. A flower (1) according to claim 7, wherein the flower has been prepared according to the method according to one of the claims 1 to 6.

9. A flower (1) according to claim 7, wherein the stem ventilation arrangement comprises a vent hole (11) through the stem wall (13) at a distance from the lower stem end (6).

10. A flower (1) according to claim 7, wherein the stem ventilation arrangement comprises a vent pipe (411) attached to the hollow stem (7), so that the vent pipe extends downwards along the hollow stem, from a position on the inner side of the stem wall (13) and at a distance from the stem end (6), out of the hollow stem at the stem end (6), and further upwards along the stem wall (13), such that air can flow through the vent pipe from between its two open pipe ends (417) as these are arranged above the water level (9).

11. A flower (1) according to claim 9, wherein the vent hole (11) is constituted by removed stem material.

12. A flower (1) according to claim 9 or claim 11, wherein the vent hole (11) comprises an insert (17) having a vent channel (19).

13. A flower (1) according to any one of claims 9, 11 or 12, wherein the vent hole (11) is arranged at a vertical position on the hollow stem (7), which is below the vertical center position between the flower portion (5) and the lower stem end (6).

14. A flower (1) according to claim 12, wherein the insert (17) comprises a male insert (21) and a female insert (23), wherein the male insert (21) is configured to be in an inserted position, inside a receiving bore (24) of the female insert (23), when in a connected position.

## Patentansprüche

1. Aufbereitungsverfahren für eine Blume mit einem geschnittenen hohlen Stiel zur Reduzierung des Wasserüberlaufs während der Entfernung der Blume (1) aus einem Wasser enthaltenden Blumenbehälter (3), wobei die Blume (1) einen Blumenteil (5) aufweist, der an einem oberen Stielende des hohlen Stiels (7), der eine Stielwand (13) umfasst, angeordnet ist, wobei der hohle Stiel (7) ein unteres Stielende (6) aufweist, **dadurch gekennzeichnet, dass** das Aufbereitungsverfahren für eine Blume den folgenden Schritt umfasst:
a) Versehen des hohlen Stiels (7) mit einer Stielbelüftungsanordnung (11, 411), wobei die Stielbelüftungsanordnung einen Luftverbindungsweg zwischen einer Innenseite der Stielwand (13) und einer Außenseite der Stielwand in einem Abstand von dem unteren Stielende (6) umfasst, so dass eine Luftverbindung zwischen der Innen- und der Außenseite der Stielwand (13) vorhanden sein kann, wenn sich das untere Stielende (6) im Wasser unterhalb eines Wasserpegels (9) befindet.

2. Aufbereitungsverfahren für eine Blume nach Anspruch 1, wobei Schritt a) das Anordnen eines Entlüftungslochs (11) durch die Stielwand (13) in einem Abstand vom unteren Stielende (6) umfasst, der mindestens einem Zehntel der Länge des hohlen Stiels (7) entspricht, wenn die Blume geschnitten wird.

3. Aufbereitungsverfahren für eine Blume nach Anspruch 1, wobei Schritt a) das Anordnen eines Entlüftungsrohrs (411) an dem hohlen Stiel (7) umfasst, so dass sich das Entlüftungsrohr von einer Position an der Innenseite der Stielwand (13) und in einem Abstand von dem Stielende (6) nach unten entlang des hohlen Stiels aus dem hohlen Stiel an dem Stielende (6) heraus und weiter nach oben entlang der Stielwand (13) erstreckt, so dass Luft durch das Entlüftungsrohr zwischen seinen beiden offenen Rohrenden (417) strömen kann, wenn diese über dem Wasserpegel (9) angeordnet sind.

4. Aufbereitungsverfahren für eine Blume nach Anspruch 2, wobei Schritt a) das Entfernen von Stielmaterial von der Wand (13) umfasst, wenn das Entlüftungsloch (11) hergestellt wird.

5. Aufbereitungsverfahren für eine Blume nach Anspruch 2 oder Anspruch 4, umfassend das Beschichten eines Randes des Entlüftungslochs (11) mit einem den Verfall reduzierenden Mittel.

6. Aufbereitungsverfahren für eine Blume nach einem der Ansprüche 2, 4 oder 5, bei dem das Entlüftungsloch (11) mit einem Einsatz (17) mit einem Entlüftungskanal (19) versehen wird.

7. Blume (1) mit einem abgeschnittenen hohlen Stiel (7), die mit einem unteren Stielende (6) des Stiels unterhalb eines Wasserpegels (9) in einem Wasser enthaltenden Behälter (3) steht, **dadurch gekennzeichnet, dass** der hohle Stiel (7) eine Stielbelüftungsanordnung (11, 411) umfasst, wobei die Stielbelüftungsanordnung einen Luftverbindungsweg zwischen einer Innenseite der Stielwand (13) und einer Außenseite der Stielwand in einem Abstand von dem unteren Stielende (6) umfasst, so dass eine Luftverbindung zwischen der Innen- und der Außenseite der Stielwand (13) vorhanden sein kann, wenn sich das untere Stielende (6) im Wasser unterhalb eines Wasserpegels (9) befindet.

8. Blume (1) nach Anspruch 7, wobei die Blume nach dem Verfahren gemäß einem der Ansprüche 1 bis 6 aufbereitet ist.

9. Blume (1) nach Anspruch 7, wobei die Stielbelüftungsanordnung in einem Abstand vom unteren Stielende (6) ein die Stielwand (13) durchsetzendes Entlüftungsloch (11) umfasst.

10. Blume (1) nach Anspruch 7, wobei die Stielbelüftungsanordnung ein Entlüftungsrohr (411) umfasst, das an dem hohlen Stiel (7) angebracht ist, so dass sich das Entlüftungsrohr entlang des hohlen Stiels von einer Position an der Innenseite der Stielwand (13) und in einem Abstand vom Stielende (6) nach unten aus dem hohlen Stiel am Stielende (6) heraus und weiter nach oben entlang der Stielwand (13) erstreckt, so dass Luft durch das Entlüftungsrohr zwischen seinen beiden offenen Rohrenden (417) strömen kann, da diese über dem Wasserpegel (9) angeordnet sind.

11. Blume (1) nach Anspruch 9, wobei das Entlüftungsloch (11) durch entferntes Stielmaterial gebildet ist.

12. Blume (1) nach Anspruch 9 oder Anspruch 11, wobei das Entlüftungsloch (11) einen Einsatz (17) mit einem Entlüftungskanal (19) umfasst.

13. Blume (1) nach einem der Ansprüche 9, 11 oder 12, wobei das Entlüftungsloch (11) an einer vertikalen Position am hohlen Stiel (7) angeordnet ist, die sich unterhalb der vertikalen Mittelposition zwischen dem Blütenteil (5) und dem unteren Stielende (6) befindet.

14. Blume (1) nach Anspruch 12, wobei der Einsatz (17) einen männlichen Einsatz (21) und einen weiblichen Einsatz (23) umfasst, wobei der männliche Einsatz (21) so konfiguriert ist, dass er sich in einer eingesteckten Position innerhalb einer Aufnahmebohrung (24) des weiblichen Einsatzes (23) befindet, wenn er in einer verbundenen Position ist.

## Revendications

1. Fleur avec un procédé de préparation de tige creuse coupée pour une réduction de déversement d'eau pendant un retrait de la fleur (1) d'un récipient de fleur contenant de l'eau (3), dans laquelle la fleur (1) présente une partie de fleur (5) agencée à une extrémité de tige supérieure de la tige creuse (7) comprenant une paroi de tige (13), dans laquelle la tige creuse (7) présente une extrémité de tige inférieure (6),
**caractérisée en ce que** le procédé de préparation de fleur comprend en outre l'étape suivante :
(a) fournir à la tige creuse (7) un agencement de ventilation de tige (11, 411) ;
dans laquelle l'agencement de ventilation de tige comprend un trajet de communication d'air entre un côté intérieur de la paroi de tige (13) et un côté extérieur de la paroi de tige, à une distance de l'extrémité de tige inférieure (6), de sorte qu'il peut y avoir une communication d'air entre lesdits côtés intérieur et extérieur de la paroi de tige (13) si l'extrémité de tige inférieure (6) est située dans de l'eau au-dessous d'un niveau d'eau (9).

2. Procédé de préparation de fleur selon la revendication 1, dans lequel l'étape a) comprend l'agencement d'un trou de ventilation (11) à travers la paroi de tige (13), à une distance de l'extrémité de tige inférieure (6) qui correspond à au moins un dixième de la longueur de la tige creuse (7), lorsque la fleur est coupée.

3. Procédé de préparation de fleur selon la revendication 1, dans laquelle l'étape a) comprend l'agencement d'un tuyau de ventilation (411) sur la tige creuse (7), de sorte que le tuyau de ventilation s'étende vers le bas le long de la tige creuse, à partir d'une position sur le côté intérieur de la paroi de tige (13) et à une distance de l'extrémité de tige (6), hors de la tige creuse au niveau de l'extrémité de tige (6), et plus haut le long de la paroi de tige (13), de sorte que de l'air peut s'écouler à travers le tuyau de ventilation à partir d'entre ses deux extrémités de tuyau ouvertes (417) lorsque celles-ci sont agencées au-dessus du niveau d'eau (9).

4. Procédé de préparation de fleur selon la revendication 2, dans lequel l'étape a) comprend l'enlèvement d'un matériau de tige à partir de ladite paroi (13), lors de la production du trou de ventilation (11).

5. Procédé de préparation de fleur selon la revendication 2 ou la revendication 4, comprenant le revêtement d'un bord du trou de ventilation (11) avec un agent de réduction de détérioration.

6. Procédé de préparation de fleur selon l'une quelconque des revendications 2, 4 ou 5, comprenant la fourniture au trou de ventilation (11) d'un insert (17) avec un canal de ventilation (19).

7. Fleur (1) avec une tige creuse coupée (7) et debout avec une extrémité de tige inférieure (6) de la tige au-dessous d'un niveau d'eau (9) dans un récipient contenant de l'eau (3), **caractérisée en ce que** la tige creuse (7) comprend un agencement de ventilation de tige (11, 411), dans laquelle l'agencement de ventilation de tige comprend un trajet de communication d'air entre un côté intérieur de la paroi de tige (13) et un côté extérieur de la paroi de tige, à une distance de l'extrémité de tige inférieure (6), de telle sorte qu'il peut y avoir une communication d'air entre lesdits côtés intérieur et extérieur de la paroi de tige (13) si l'extrémité de tige inférieure (6) est située dans l'eau au-dessous d'un niveau d'eau (9).

8. Fleur (1) selon la revendication 7, dans laquelle la fleur a été préparée selon le procédé selon l'une quelconque des revendications 1 à 6.

9. Fleur (1) selon la revendication 7, dans laquelle l'agencement de ventilation de tige comprend un trou de ventilation (11) à travers la paroi de tige (13) à une distance de l'extrémité de tige inférieure (6).

10. Fleur (1) selon la revendication 7, dans laquelle l'agencement de ventilation de tige comprend un tuyau de ventilation (411) fixé à la tige creuse (7), de sorte que le tuyau d'évent s'étend vers le bas le long de la tige creuse, à partir d'une position sur le côté intérieur de la paroi de tige (13) et à une distance de l'extrémité de tige (6), hors de la tige creuse au niveau de l'extrémité de tige (6), et plus haut le long de la paroi de tige (13), de sorte que de l'air peut s'écouler à travers le tuyau de ventilation à partir d'entre ses deux extrémités de tuyau ouvertes (417) lorsque celles-ci sont agencées au-dessus du niveau d'eau (9).

11. Fleur (1) selon la revendication 9, dans laquelle le trou de ventilation (11) est constitué par un matériau de tige retiré.

12. Fleur (1) selon la revendication 9 ou la revendication 11, dans laquelle le trou de ventilation (11) comprend un insert (17) présentant un canal de ventilation (19).

13. Fleur (1) selon l'une quelconque des revendications 9, 11 ou 12, dans laquelle le trou de ventilation (11) est agencé dans une position verticale sur la tige creuse (7), qui est en dessous de la position centrale verticale entre la partie de fleur (5) et l'extrémité de tige inférieure (6).

14. Fleur (1) selon la revendication 12, dans laquelle l'insert (17) comprend un insert mâle (21) et un insert femelle (23), dans laquelle l'insert mâle (21) est configuré pour être dans une position insérée, à l'intérieur d'un alésage de réception (24) de l'insert femelle (23), lorsqu'il est dans une position connectée.
